# EUROPEAN PATENT APPLICATION

(11) **EP 2 600 387 A1**
(43) Date of publication of application: **05.06.2013**
(21) Application number: 12193491.3
(22) Date of filing: 20.11.2012
(51) Int. Cl.: H01J 61/44, C09K 11/71, C09K 11/72, C09K 11/08, C09K 11/77

(54) **Fluorescent lamps having high CRI**

(30) Priority: 29.11.2011 US 201113305860
(71) Applicant: General Electric Company, Schenectady, New York 12345 (US)
(72) Inventor: Du, Fangming, Cleveland OH Ohio 44112 (US); Beers, William Winder, Cleveland, OH Ohio 44112 (US); Jansma, Jon Bennett, Cleveland OH Ohio 44112 (US)
(74) Representative: Szary, Anne Catherine

(57) **Abstract**

A fluorescent lamp (10) is provided including a five phosphor blend (16) comprising four rare earth phosphors, including BAMn, and a non-rare earth white halophosphate phosphor. This phosphor blend (16) provides a lamp (10) that exhibits high color rendering index (CRI), of at least about 85, i.e. at least 87, while simultaneously achieving good lumen output, or lumens per watt (LPW), of at least about 70, i.e. at least 75, at all CCTs, and particularly at lower CCT of between about 3000K and 4100K. The phosphor system provided includes a rare earth-doped red emitting phosphor, a rare earth-doped blue emitting phosphor, a rare earth-doped green-blue emitting phosphor, a rare earth-doped green emitting phosphor and a non-rare earth white halophosphate phosphor.

## Description

### BACKGROUND OF THE DISCLOSURE

The present invention relates to phosphor compositions, particularly phosphors for use in fluorescent lamps. More particularly, the present invention relates to simultaneously improving the CRI and lumen output of a fluorescent lamp, at low CCT, by providing an optimized phosphor system for use therein, the system including a blend of at least four rare earth phosphors, one of which is a green-blue emitting rare earth phosphor, in combination with a halophosphate phosphor.

Fluorescent lamps typically have a transparent glass envelope enclosing a sealed discharge space containing an inert gas and mercury vapor. When subjected to a current provided by electrodes, the mercury ionizes to produce radiation having primary wavelengths of 185 nm and 254 nm. This ultraviolet radiation, in turn, excites phosphors on the inside surface of the envelope to produce visible light which is emitted through the glass.

Generally, a fluorescent lamp uses a phosphor for illumination which absorbs the 254 nm Hg-resonance radiation and is activated to convert the ultraviolet emission of the mercury vapor generated by the lamp fill into visible light. Conventionally, a white-emitting calcium halophosphate phosphor, such as Ca₅(PO₄)₃(F,Cl)₂:Sb,Mn has been used to convert the UV light to white light. More recently, in an effort to improve the color-rendering properties and emission output of fluorescent lamps, a three-band type fluorescent lamp, which employs a mixture of red, green and blue-emitting phosphors, has been used to render illumination of a white color. For example, the phosphor may include a mixture of europium-activated barium magnesium aluminate phosphor BaMgAl₁₀O₁₇:Eu²⁺ for the blue-emitting phosphor, cerium and terbium-activated magnesium aluminate phosphor (Ce,Tb)MgAl₁₁O₁₉ for the green-emitting phosphor, and europium-activated yttrium oxide phosphor Y₂O₃:Eu³⁺ for the red-emitting phosphor, mixed in an adequate ratio. The combined spectral output of such a phosphor blend produces a white light.

The apparent, or perceived, color of a light source is described in terms of color temperature which is the temperature of a black body that emits radiation of about the same chromaticity as the radiation considered. A light source having a color temperature of 3000 Kelvin (3000K) has a larger weight percent of red component than a light source having a color temperature of 4100 Kelvin (4100K). The color temperature of a lamp using a phosphor blend can be varied by changing the ratio and composition of the phosphors.

Color quality is further described in terms of color rendering, and more particularly color rendering index (CRI or Rₐ), which is a measure of the degree to which the psycho-physical colors of objects illuminated by a light source conform to those of a reference illuminant for specified conditions. CRI is in effect a measure of how well the spectral distribution of a light source compares with that of an incandescent (blackbody) source, which has a Planckian distribution between the infrared portion of the spectrum, above over 700 nm, and the ultraviolet portion of the spectrum, below 400 nm, i.e. in the visible portion of the spectrum, between about 400 and about 700 nm. The discrete spectra which characterize phosphor blends will yield good color rendering of objects whose colors match the spectral peaks, but not as good for objects whose colors lie between the spectral peaks. Lamp CRI can be improved by using an appropriate combination of rare earth phosphors or by using phosphors emitting broadband spectral distribution.

The color appearance of a lamp is described by its chromaticity coordinates which can be calculated from the spectral power distribution according to standard methods. See CIE, *Method of measuring and specifying color rendering properties of light sources* (2nd ed.), Publ. CIE No. 13.2 (TC-3,2), Bureau Central de la CIE, Paris, 1974. The CIE standard chromaticity diagram includes the color points of black body radiators at various temperatures. The locus of black body chromaticities on the x,y-diagram is known as the Planckian locus. Any light emitting source represented by a point on this locus may be specified by a color temperature. A line can be drawn from a point near but not on this Planckian locus to intersect the Planckian locus in order to determine the correlated color temperature (CCT) of the point, and all points on this line look to the average human eye as having nearly the same color. Luminous efficacy of a source of light, or the brightness of the lamp, is the quotient of the total luminous flux emitted by the total lamp power input as expressed in lumens per watt (LPW or lm/W).

Spectral blending studies have shown that the LPW and CRI of white light sources are dependent upon the spectral distribution of the individual color phosphors. It is expected that such phosphors preserve structural integrity during extended lamp operation such that the phosphors remain chemically stable over a period of time while maintaining stable CIE color coordinates of the lamp. The human eye does not have the same sensitivity to all visible light wavelengths. Rather, light with the same intensity but different wavelengths will be perceived as having different luminosity. The use oftri-phosphor blends has led to improvements in color rendering or LPW as compared to single phosphor lamps, though generally not both at the same time.

Known phosphor blend systems, such as those set forth in US Patent 5,854,533, have been shown to exhibit good CRI values. The 5,854,533 patent, however, discloses the use of a double layer phosphor coating including a four-phosphor blend disposed over a halo phosphor layer, wherein the four phosphor blend includes Zn₂SiO₄, but does not include the use of the green phosphor LaPO₄:Ce³⁺,Tb³⁺.

Thus, a need exists for a phosphor blend that provides a CRI of at least 85 or better, preferably at lower CCT of from about 3000K to about 4100K, as well as LPW of at least about 70, in a single layer phosphor coating format. The use of a blend of at least four rare earth phosphors, i.e. four or five rare earth phosphors, in combination with a white halophosphate phosphor, in accord herewith, leads to improved efficacy of various lighting sources in which it is used while improving the CRI. In addition, this phosphor blend provides the foregoing high CRI at all CCTs, and particularly at low CCT, for example less than about 4100K, i.e. at about 3500K or 3000K.

### SUMMARY OF THE DISCLOSURE

A fluorescent lamp is provided including a phosphor system comprising a blend of at least four rare earth phosphors, in combination with a non-rare earth, white halophosphate phosphor. This phosphor blend provides a lamp that exhibits high color rendering index (CRI), of at least 85, i.e. of at least about 87, while simultaneously achieving good lumen output, or lumens per watt (LPW), of at least 70, i.e. of at least about 75 or higher, at all CCTs, and particularly at lower CCTs below about 4100K, in a single layer coating. The phosphor system provided includes at least a rare earth-doped red emitting phosphor, a rare earth-doped blue emitting phosphor, a rare earth-doped green emitting phosphor, and a rare earth-doped green-blue emitting phosphor, used in combination with a non-rare earth, white halophosphate phosphor.

In one embodiment, the phosphor blend system includes: a red emitting rare earth phosphor, for example YEO; a green emitting rare earth phosphor selected from, for example, LAP, CAT, and CBT; a blue emitting phosphor selected from, for example, BAM, SECA, and SECA+; and a green-blue emitting rare earth phosphor selected from, for example, BAMn and SAE, in combination with a broad band white halophosphate phosphor. More specifically, the phosphor system may include, for example, Y₂O₃:Eu³⁺, LaPO₄:Ce³⁺,Tb³⁺, BaMgAl₁₀O₁₇:Eu²⁺, and BaMgAl₁₀O₁₇:Eu²⁺,Mn²⁺, as the rare earth phosphor components, and Ca₅(PO₄)₃(F,Cl):Sb³⁺,Mn²⁺ as the white halophosphate phosphor component of the blend. For example, the phosphor system may comprise: Y₂O₃:Eu³⁺ as from about 30 wt% to about 65 wt%, i.e. from about 35 wt% to about 60 wt%; LaPO₄:Ce³⁺,Tb³⁺ as from about 8 wt% to about 20 wt%, i.e. from about 10 wt% to about 17 wt%; BaMgAl₁₀O₁₇:Eu²⁺ as from about 1 wt% to about 10 wt%, i.e. from about 2 wt% to about 7 wt%; BaMgAl₁₀O₁₇:Eu²⁺,Mn²⁺ , as from about 3 wt% to about 10 wt%, i.e. from about 5 wt% to about 9 wt%" and Ca₅(PO₄)₃(F,Cl):Sb³⁺ Mn²⁺ as from about 10 wt% to about 45 wt%, i.e. from about 16 wt% to about 38 wt%, based on the total weight of the phosphor system.

In yet another embodiment, the phosphor system is provided as a single layer coating, disposed on the inner surface of the discharge chamber of a lamp. In one embodiment, the single layer coating comprises a mixture of a rare earth-doped red emitting phosphor, a rare earth-doped green emitting phosphor, a rare earth-doped blue emitting phosphor, a rare earth-doped green-blue emitting phosphor, and a non-rare earth white halophosphate phosphor.

An advantage of the phosphor blends provided herein is that the lamp including such phosphor blend will achieve high CRI and good LPW at all CCTs, and particularly at lower CCT, in a single layer coating format.

This and other advantages and benefits of the novel phosphor system provided herein will become apparent upon reading and understanding the disclosure that follows.

### BRIEF DESCRIPTION OF THE DRAWINGS

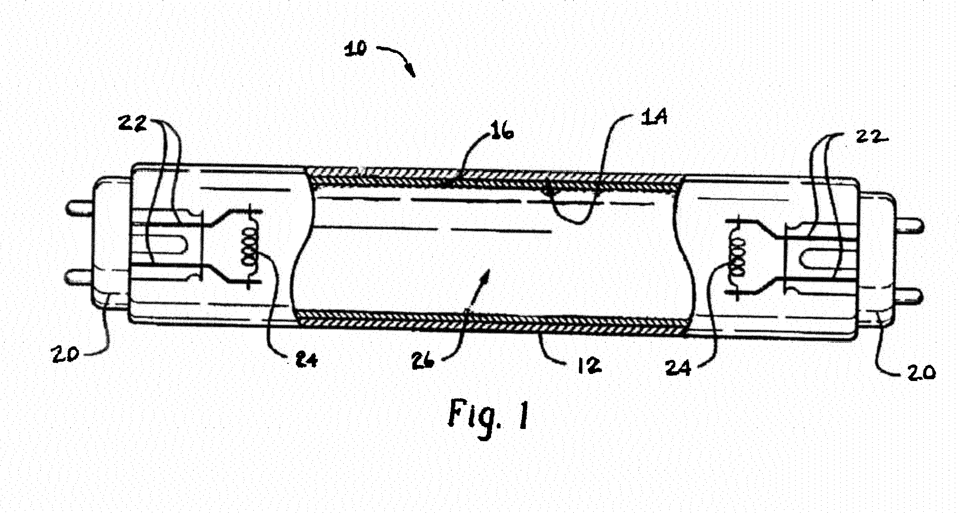

FIGURE 1 is a schematic cross-section of a fluorescent lamp having a phosphor layer in accord with the invention.

### DETAILED DESCRIPTION OF THE PREFERRED EMBODIMENTS

The present disclosure relates to a discharge lamp, for example a fluorescent lamp including a phosphor system comprising a blend of four rare earth phosphors in combination with a non-rare earth white halophosphate phosphor. More particularly, the phosphor system, in one embodiment, comprises a non-rare earth white halophosphate phosphor and a blend of four rare earth phosphors including a red emitting phosphor, a green emitting phosphor, a blue emitting phosphor, and a green-blue emitting phosphor. This phosphor blend provides a lamp that exhibits high color rendering index (CRI), of at least 85, i.e. of at least 87, at all CCTs, and particularly at lower CCT, of about 4100K and below.

In one embodiment, the phosphor system includes at least four phosphors selected from YEO, LAP, CAT, CBT, BAM, SECA, SECA+, SAE, and BAMn, and additionally a white halophosphate phosphor. For example, in one embodiment, the phosphor system may include, Y₂O₃:Eu³⁺, LaPO₄:Ce³⁺,Tb³⁺, BaMgAl₁₀O₁₇:Eu²⁺, and BaMgAl₁₀O₁₇:Eu²⁺,Mn²⁺, and Ca₅(PO₄)₃(F,Cl):Sb³⁺, Mn²⁺. For example, the phosphor system may comprise Y₂O₃:Eu³⁺ as from about 30 wt% to about 65 wt%, i.e. from about 35 wt% to about 60 wt%; LaPO₄:Ce³⁺,Tb³⁺ as from about 8 wt% to about 20 wt%, i.e. from about 10 wt% to about 17 wt%; BaMgAl₁₀O₁₇:Eu²⁺ as from about 1 wt% to about 10 wt%, i.e. from about 2 wt% to about 7 wt%; BaMgAl₁₀O₁₇:Eu²⁺,Mn²⁺ , as from about 3 wt% to about 10 wt%, i.e. from about 5 wt% to about 9 wt%; and Ca₅(PO₄)₃(F,Cl):Sb³⁺, Mn²⁺ as from about 10 wt% to about 45 wt%, i.e. from about 16 wt% to about 38 wt%, based on the total weight of the phosphor system.

The phosphor system may be provided as a single layer coating, disposed on the inner surface of the discharge chamber of a lamp. Alternatively, the single layer phosphor system is provided in combination with a non-phosphor containing UV reflective layer as is known in the art. Further, the phosphor blend may be deposited in more than one layer.

Use of the term "single layer" herein, in combination with phosphor blend, phosphor system, or any permutation thereof, refers only to that layer of the coating on the interior surface of the discharge vessel or chamber containing the unique blend of phosphors in accord with the disclosure. Further, the terms "blend" and "system" may at times be used interchangeably to refer to the combination of four rare earth phosphors and a non-rare earth white emitting halophosphate phosphor. The single layer phosphor system may be provided for use on an inner surface of the discharge chamber or tube of a fluorescent lamp, whether linear, U-shaped, or otherwise configured. For example, the phosphor system may be described herein with respect to use thereof in a standard T5, T8, T12 or CFL lamp configuration, as known in the art. However, it is understood that the phosphor system provided has use beyond just the named linear formats, to all lighting solutions relying on a phosphor coating to convert light energy to visible white light for emission. Though the phosphor system disclosed may be used on any type or size of discharge lamp, for clarity and ease of understanding, the invention may at times be described herein particularly with reference to a single size/type of lamp, for example a 4 foot linear lamp design, operable at a CCT of no greater than 6500K. Such is not intended, however, to limit the inventive coating described and claimed herein to any specific lamp type, size, or CCT.

Referring to FIG. 1, there is depicted a representative fluorescent lamp 10 comprising an elongated silicate glass envelope 12 having a circular cross-section. The low pressure mercury discharge assembly in said lamp includes a pair of spaced conventional electrode structures 24 at each end connected to electrical contacts 22 fed through a base 20 fixed at both ends of the sealed glass envelope. The discharge-sustaining fill 26 in the sealed glass envelope is an inert gas such as argon, krypton, or a mixture thereof at a low pressure in combination with a small quantity of mercury to provide the low vapor pressure manner of lamp operation. Deposited on the inner surface of the glass envelope is phosphor blend layer 16 including a blend of phosphors described further herein. In one embodiment of the invention, the lamp 10 may have a second layer of material 14 positioned between the phosphor blend layer 16 and the inner surface of the glass envelope 12. This second layer can be an ultraviolet reflecting barrier layer as is known in the art. Such a barrier layer can comprise, for example, a mixture of alpha- and gamma-alumina particles.

The above illustrated phosphor layer coatings can be formed by various already known procedures, including but not limited to deposition from liquid suspensions and electrostatic deposition. As such, the manner of coating deposition is not a limiting factor of the invention. For example, the phosphor can be deposited on the inner glass surface of the discharge tube from a conventional aqueous suspension including various organic binders and adherence promoting agents. In this procedure, the aqueous suspension is applied and then dried in the conventional manner.

The inventors have found that it is possible to further improve the efficacy of current lighting sources utilizing phosphor emissions by optimizing the phosphor blend to provide not only higher CRI, above 85, i.e. about 87 or higher, but to further achieve this performance parameter at a low CCT and as a single layer. As used herein, the terms "luminosity" and "luminous efficacy" are synonymous. It has been discovered that the use of a phosphor blend in accord herewith will lead to improvements in the luminosity of various lighting sources. For convenience, the discussion and examples described herein refer to the use of the optimized phosphor blend of the present invention in Hg-based fluorescent lamps. However, it should be recognized that the inventive concepts include applications relating to other light sources incorporating phosphors, such as white LED's, xenon based discharge lamps, and plasma display panels, as well as electrodeless lamps, for example CFL and LFL lamps.

In one embodiment of the present invention, an optimized five phosphor blend for use in a light source having a color rendering index of at least about 85 or better, at all CCTs and particularly at low CCT, from 4100K down to about 3000K, is provided. Specifically, the phosphor system demonstrated herein includes phosphors selected to provide a blend of a rare earth-doped red emitting phosphor, a rare earth-doped blue emitting phosphor, a rare earth-doped green emitting phosphor, a rare earth-doped green-blue emitting phosphor, and a non-rare earth white halophosphate phosphate phosphor. The four rare earth phosphors may be selected, for example, from the following:
- Red-Emitting Phosphor:: Y₂O₃:Eu³⁺ (YEO);
Y(P,V)O₄:Eu²⁺ (YVP)
GdMgB5O10: Ce3+, Mn2+ (CBM)
- Green-Emitting Phosphor:: LaPO₄:Ce³⁺,Tb³⁺ (LAP)
Ce_{0.67}Tb_{0.33}MgAl₁₁O₁₉ (CAT)
GdMgB₅O₁₀:Ce³⁺,Tb³⁺ (CBT)
- Blue-Emitting Phosphor:: (Sr, Ba, Ca)₅(PO₄)₃Cl:Eu₂₊ (SECA; SECA+)
BaMgAl₁₀O₁₇:Eu²⁺ (BAM)
- Blue-Green-Emitting Phosphor:: BaMgAl₁₀O₁₇:Eu²⁺,Mn²⁺ (BAMn)
Sr₄Al₁₄O₂₅:Eu²⁺ (SAE)

The above-described combination of rare earth phosphors, when combined with a non-rare earth, broad band white halophosphate phosphor, will result in enhanced performance parameters over conventional phosphor blends due to the inclusion specifically of the phosphors identified, and particularly when combined in accord with the disclosure herein to include YEO, LAP, BAM and BAMn, and a non-rare earth white halophosphate phosphor comprising Ca₅(PO₄)₃(F,Cl): Sb³⁺,Mn²⁺. This is true for lamps at all CCTs, but especially for those having a CCT of 4100K or less. The correlated color temperature (CCT) of the blend, which is determined based on the mass fraction of each particular phosphor in the system, may range from about 2500K to about 8000K. For example, it is known that the CCT will increase as the relative amount of blue phosphor in the blend increases and that of the red phosphor decreases.

The inclusion of a non-rare earth white halophosphate phosphor reduces the rare earth phosphor content and therefore the overall expense of the phosphor system, while contributing to maintaining acceptable lumen output. In the currently disclosed phosphor blend, the non-rare earth white halophosphate phosphor is included as up to about 40 wt%, i.e. about 5 wt% to about 40 wt% of the blend, thus reducing significantly the amount of the more expensive rare earth phosphor components needed. The cost of the system is further reduced by coating the phosphor system as a single layer.

The relative proportions of the individual phosphors in the five phosphor blend are such that the resulting light exhibits an increased CRI as compared to a tri-phosphor component blend as known in the art consisting of one each of a conventional red, green, and blue phosphor, but lacking the broad band blue-green phosphor and the white halophosphate phosphor specified herein. When blended, the emission of the phosphor blend in accord herewith will produce visible white light of predetermined CCT value preferably between about 3000K and about 4100K. Lamps including such blends will further exhibit CRI of at least about 87, and good LPW values of at least about 75. The relative amounts of each phosphor can be described in terms of weight fraction or weight percent. The weight percent of all of the individual phosphors should add up to 1.0. Although not intended to be limiting, in one embodiment, the phosphor system may include, for example, Y₂O₃:Eu³⁺ as from about 30 wt% to about 65 wt% of the blend, LaPO₄:Ce³⁺,Tb³⁺ as from about 8 wt% to about 20 wt% of the blend, BaMgAl₁₀O₁₇:Eu²⁺ as from about 1 wt% to about 10 wt% of the blend, BaMgAl₁₀O₁₇:Eu²⁺,Mn²⁺ as from about 3 wt% to about 10 wt% of the blend, and Ca₅(PO₄)₃(F,Cl):Sb³⁺,Mn²⁺ as from about 10 wt% to about 45 wt% of the blend, based on the total weight of the phosphor system.

The following examples are provided to enable those skilled in the art to more clearly understand and practice the invention. The invention is in no way limited to the examples.

### EXAMPLES

Lamps were prepared with phosphor blend coatings in accord with an embodiment of the invention and in accord with other known fluorescent lamp phosphor blends, and the results were compared. One or more lamps were prepared from each blend noted, and each lamp was tested to determine the LPW and the CRI of that lamp at the noted CCT. If more than one lamp was prepared and tested, the data has been averaged. All remaining lamp parameters were held constant for purposes of comparison. All lamps were 4 foot linear fluorescent lamps having a F32 T8 lamp configuration, well known to those skilled in the art.

### EXAMPLE 1

Lamps were prepared using a phosphor blend in accord with an embodiment of the invention, comprising Y₂O₃:Eu³⁺, LaPO₄:Ce³⁺,Tb³⁺, BaMgAl₁₀O₁₇:Eu²⁺, BaMgAl₁₀O₁₇:Eu²⁺,Mn²⁺, and Ca₅(PO₄)₃(F,Cl):Sb³⁺, Mn²⁺ phosphor blend as set forth in Table 1, at the CCT shown. All phosphor content is shown in weight fraction of the total phosphor content.

**TABLE 1: YEO-LAP-BAM-BAMn-WHITE HALOPHOSPHATE PHOSPHOR SYSTEM**

| **PHOSPHOR BLEND** | **LPW** | **CRI** | **CCT** |
|---|---|---|---|
| 1.* YEO (0.598) LAP (0.158) BAM (0.024) BAMn (0.056) WhHalo (0.165) | 82.0 | 87.3 | 3000K |
| 2. YEO (0.569) LAP (0.166) BAM (0.037) BAMn (0.066) WhHalo (0.161) | 80.9 | 88.4 | 3500K |
| 3. YEO (0.368) LAP (0.109) BAM (0.064) BAMn (0.086) WhHalo (0.374) | 80.0 | 89.1 | 4100K |

| | | | |
|---|---|---|---|
| *The LPW and CRI values are the average of two lamps tested. | | | |

The lamps of Example 1, including a phosphor blend in accord with an embodiment of the invention, exhibited in all instances a CRI of 87 or better. Further, the high CRI values are shown to be consistent across a range of CCTs.

### EXAMPLE 2

This Comparative Example includes data for 4 foot linear fluorescent lamps having the F32 T8 configuration, in all ways the same as those tested in Example 1, however, these lamps were prepared using phosphor blends, as set forth in Table 2, which were lacking in one or more of the phsophors used in the current inventive phosphor blend. As in Example 1, all other lamp parameters were held consistent.

**TABLE 2: COMPARATIVE EXAMPLE PHOSPHOR SYSTEMS**

| **PHOSPHOR BLEND** | **LPW** | **CRI** | **CCT** |
|---|---|---|---|
| 4.** CBM (0.301) Halo (0.424) SAE (0.257) Zn₂SiO₄ (0.018) | 54.8 | 92.0 | 4100K |
| 5.*** YEO (0.480) LAP (0.415) BAM (0.088) BAMn (0.018) | 86.3 | 87.6 | 4100K |
| 6. YEO (0.661) LAP (0.259) BAM (0.042) BAMn (0.038) | 85.8 | 86.7 | 3500K |
| 7. YEO (0.644) LAP (0.320) BAM (0.007) BAMn (0.030) | 87.0 | 85.8 | 3500K |

| | | | |
|---|---|---|---|
| ** LPW and CRI are an average of three lamps. *** LPW and CRI are an average of six lamps tested. | | | |

Example 2 included several comparative phosphor blends. The lamps tested having phosphor blend 4, having a CCT of 4100K, included a blend that, while it included a white halophosphate phosphor, it also included SAE blue-green phosphor in place of BAMn, and did not include a green phosphor in accord with the invention, i.e. LAP. In addition, this blend further included Zn₂SiO₄ which is not part of the inventive blend. While the lamp did achieve CRI of 92, the LPW was very low, only 54.8. Thus, Lamp 4 as compared to Lamp 3 above, also at 4100K, did not provide comparable total lamp performance. Lamps 5, 6, and 7 of this Example each included a phosphor blend of YEO-LAP-BAM-BAMn without the white halophosphate phosphor used in Lamps 1, 2, and 3 of Example 1. The content of the phosphors varied as did the lamp CCTs. Only Lamp 5 achieved a CRI of 87, however it is still significantly lower than that achieved by lamp 3 including the white halophosphate phosphor in accord with the invention.

Additional additives may be included in the phosphor blend and can include a dispersion vehicle, a binder, and one or more of various known non-luminescent additives, including, e.g., alumina, calcium phosphate, thickeners, dispersing agents, and certain borate compounds as are known in the art.

Any known technique may be used for depositing the phosphor coating. As such, the manner of deposition itself is not a limiting factor of the invention. Without intending to be bound in any way, one technique which may be used includes blending the various phosphor powders by weight, dispersing the blended powders in a water based system, which may contain other additives as are known in the art, including for example adherence promoters, such as hydroxyethylcellulose or fine non-luminescent particles of alumina or calcium pyrophosphate, dispersing agent(s), and thickener(s), for example polyethylene oxide. In this type of method, the suspension is then typically diluted with deionized water until it is suitable for producing a coating of the desired thickness or coating weight, and then applied to the inside of the glass tube and dried in accord with conventional coating techniques known in the art. Optionally, after the first thin coat or layer is applied, additionally desired thin coats or layers may be applied The thin layer, or layers if more than one is applied, has a thickness sufficient to absorb substantially all of the UV light produced by the arc. Another suitable option for applying the coating is by known electrostatic deposition techniques.

While the invention has been described in detail and with reference to specific embodiments thereof, it will be apparent to one skilled in the art that various changes and modifications can be made therein without departing from the scope of the invention. For example, the phosphor blend of the present invention can be used in a compact fluorescent lamp arrangement, which may be helical in nature or have another compact configuration.

## Claims

1. An arc discharge lamp (10) comprising:
a lamp envelope (12) enclosing a discharge space and having an inner surface;
an ionizable medium within said lamp envelope comprising mercury and an inert gas;
and
a single-layer phosphor blend (16) disposed on said inner surface, said blend comprising a five-phosphor blend including at least four rare earth phosphors, one each of: a red phosphor, a blue phosphor, a green-blue phosphor, and a green phosphor, combined with a non-rare earth white halophosphate phosphor, wherein said lamp exhibits a CRI of at least 85 at all CCTs.

2. A lamp (10) according to claim 1, wherein said phosphor blend comprises a mixture of YEO, LAP, BAM, BAMn, and a white halophosphate phosphor.

3. A lamp (10) according to claim 1 or claim 2, wherein the weight percent of the red phosphor is from about 30 wt% to about 65 wt%, the weight percent of the green phosphor is from about 8 wt% to about 20 wt%, the weight percent of the blue phosphor is from about 1 wt% to about 10 wt%, the weight percent of the green-blue phosphor is from about 3 wt% to about 10 wt%, and the weight percent of the white halophosphate phosphor is from about 5 wt% to about 45 wt%, based on the total weight of the phosphor blend.

4. A lamp (10) according to any preceding claim, wherein the weight percent of the red phosphor is 59.8 wt%, the weight percent of the green phosphor is 15.8 wt%, the weight percent of the blue phosphor is 2.4 wt%, the weight percent of the green-blue phosphor is 5.6 wt%, and the weight percent of the white halophosphate phosphor is 16.5 wt%, based on the total weight of the phosphor blend, wherein the lamp exhibits a CCT of 3000K.

5. A lamp (10) according to any one of claims 1 to 3, wherein the weight percent of the red phosphor is 56.9 wt%, the weight percent of the green phosphor is 16.6 wt%, the weight percent of the blue phosphor is 3.7 wt%, the weight percent of the green-blue phosphor is 6.6 wt%, and the weight percent of the white halophosphate phosphor is 16.1 wt%, based on the total weight of the phosphor blend, wherein the lamp exhibits a CCT of 3500K.

6. A lamp (10) according to any one of claims 1 to 3, wherein the weight percent of the red phosphor is 36.8 wt%, the weight percent of the green phosphor is 10.9 wt%, the weight percent of the blue phosphor is 6.4 wt%, the weight percent of the green-blue phosphor is 8.6 wt%, and the weight percent of the white halophosphate phosphor is 37.4 wt%, based on the total weight of the phosphor blend, wherein the lamp exhibits a CCT of 4100K.

7. A method of providing white light illumination, the method comprising:
providing a discharge tube defining an inner chamber having an inner surface and an ionizable fill (26) disposed therein and operatively connected to a power source;
blending a mixture of particulate phosphors and preparing a suspension therefrom;
coating the inner surface of the discharge tube with the suspension and allowing it to dry to form a single phosphor blend layer (16); and
energizing the ioniziable fill such that the phosphor blend is activated and white light is emitted from the lamp, the lamp exhibiting a CRI of at least 85,
wherein the phosphor blend layer comprises phosphors:
at least one each of a rare earth-doped red phosphor, a rare earth-doped blue phosphor, a rare earth-doped green phosphor, a rare earth-doped green-blue phosphor; and a non-rare earth white halophosphate phosphor.

8. A method according to claim 7, wherein said phosphor blend comprises a mixture of YEO, LAP, BAM, BAMn, and a white halophosphate phosphor.

9. A method according to claim 7 or claim 8, wherein the mixture of particulate phosphors includes from about 30 wt% to about 65 wt% of the red phosphor, from about 8 wt% to about 20 wt% of the green phosphor, from about 1 wt% to about 10 wt% of the blue phosphor, from about 3 wt% to about 10 wt% of the green-blue phosphor, and from about 5 wt% to about 45 wt% of the white halophosphate phosphor, based on the total weight of the phosphor blend.

10. A phosphor blend comprising at least 4 rare earth phosphors in combination with a non-rare earth halophosphate phosphor, the blend capable of producing substantially white light upon activation.
